(19) Europäisches Patentamt
European Patent Office
Office européen des brevets

(11) EP 3 041 874 B1

(12) # EUROPEAN PATENT SPECIFICATION

(45) Date of publication and mention of the grant of the patent:
**16.05.2018 Bulletin 2018/20**

(21) Application number: **14766612.7**

(22) Date of filing: **03.09.2014**

(51) Int Cl.:
***C08F 220/06** (2006.01)*
***C08F 220/18** (2006.01)*
***C08K 5/15** (2006.01)*
***C09J 4/06** (2006.01)*
***C09J 133/04** (2006.01)*

(86) International application number:
**PCT/US2014/053789**

(87) International publication number:
**WO 2015/034864 (12.03.2015 Gazette 2015/10)**

(54) **ACID-MODIFIED EPOXIDIZED VEGETABLE OIL AND (METH)ACRYLIC COPOLYMER CURABLE OR CURED COMPOSITIONS**

AUSHÄRTBARE ODER GEHÄRTETE ZUSAMMENSETZUNGEN AUS SÄUREMODIFIZIERTEM EPOXIDIERTEM PFLANZENÖL UND(METH)ACRYLCOPOLYMER

COMPOSITIONS DURCISSABLES OU DURCIES D'HUILE VÉGÉTALE ÉPOXYDÉE MODIFIÉE PAR UN ACIDE ET DE COPOLYMÈRE (MÉTH)ACRYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.09.2013 US 201361874670 P**

(43) Date of publication of application:
**13.07.2016 Bulletin 2016/28**

(73) Proprietor: **3M Innovative Properties Company**
**St. Paul, MN 55133-3427 (US)**

(72) Inventors:
- **LIPSCOMB, Corinne E.**
  **Saint Paul, Minnesota 55133-3427 (US)**
- **LEWANDOWSKI, Kevin M.**
  **Saint Paul, Minnesota 55133-3427 (US)**

(74) Representative: **Herzog, Fiesser & Partner Patentanwälte PartG mbB**
**Isartorplatz 1**
**80331 München (DE)**

(56) References cited:
**WO-A2-2011/156378**
**US-A1- 2010 151 241**
**US-A1- 2010 261 806**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Background

Epoxidized vegetable oil (EVO) has been used as a component in various polymeric compositions. For example, it has been used as a plasticizer in compositions with polymeric materials such as poly(vinyl chloride). In another example, it has been used as a low glass transition temperature epoxide in epoxide resins under conditions of cationic acid catalysis.

Multiple approaches have been used for incorporating EVO into pressure-sensitive adhesives. One approach involved opening an epoxide group with acrylic acid to form an acrylated vegetable oil that was then copolymerized with other acrylic monomers (for example, see PCT Application Publication WO 2008/144703 of Koch et al.). Another approach involved reacting an EVO with a dibasic acid or dimer acid (for example, see PCT Application Publications WO 2011/156378 and WO 2013/086014 of Kalchang et al.). Still another approach used an epoxidized fatty acid ester as a crosslinking agent for a polycondensate of a fatty alcohol dimer and a fatty acid dimer (for example, see US Patent Application Publication 2012/0156484 of Vendamme et al.). Yet another approach involved opening an epoxidized vegetable oil to form diols with phosphoric acid. The resulting diols were reacted with the epoxidized vegetable oil to form a crosslinked polymer matrix (for example, see PCT Application Publication WO 2012/100171 of Sun et al.).

US 2010/261806 A1 and US 2010/151241 A1 relates also to PSA compositions based on acid modified epoxidized vegetable oils and/or acrylic polymers.

### Summary

The use of renewable materials within polymeric compositions is desirable. Curable and cured compositions are provided that can contain a significant amount of a renewable material based on a vegetable oil. More particularly, the curable composition contains an acid-modified epoxidized vegetable oil (acid-modified EVO) and a (meth)acrylic copolymer having pendant carboxylic acid groups. When the curable composition is reacted to form a cured composition, the acid-modified EVO, which contains greater than one epoxide group per molecule, crosslinks the (meth)acrylic copolymer by reacting with the pendant carboxylic acid groups. If the (meth)acrylic copolymer is elastomeric, the cured composition can be a pressure-sensitive adhesive.

In a first aspect, a curable composition according to claims 1 to 10 is provided. The curable composition includes (a) an acid-modified EVO having greater than one epoxide group per molecule and (b) a (meth)acrylic copolymer having pendant carboxylic acid groups and that is free of an epoxide group.. The acid-modified EVO is a reaction product of (1) an EVO and (2) a mono-functional carboxylic acid that is free of an ethylenically unsaturated group.

In a second aspect, a cured composition according to claims 11 to 13 is provided. The cured composition is a reaction product of a curable composition as described above.

In a third aspect, an article according to claims 14 and 15 is provided. The article includes a substrate and a cured composition layer positioned adjacent to the substrate. The cured composition is a reaction product of the curable composition as described above.

### Detailed Description

The use of renewable materials in the preparation of polymeric materials is considered desirable. That is, as the world's petroleum reserves diminish, alternative materials such as those based on plants or other renewable resources must be found to prepare polymeric materials. It may be desirable that a significant amount of the reactive materials used to prepare certain polymeric materials are based on renewable materials such as those obtainable from plant sources.

Curable compositions are provided that contain a renewable material that is a vegetable oil derivative. The vegetable oil derivative is an acid-modified EVO. The acid-modified EVO, which has greater than one group per molecule, is combined in the curable composition with a polymeric material having pendant carboxylic acidic groups. More specifically, the curable composition contains (a) a (meth)acrylic copolymer and (b) an acid-modified EVO. The (meth)acrylic copolymer has pendant carboxylic acid groups and is free of an epoxide group. The reaction of the epoxide groups of the acid-modified EVO with the pendant carboxylic acid groups of the (meth)acrylic copolymer results in the crosslinking of the (meth)acrylic copolymer and the formation of a cured composition. That is, the pendant carboxylic acid groups of the (meth)acrylic acid can ring open epoxide groups of the acid-modified EVO.

As used herein, the term "ethylenically unsaturated" refers to a group or compound have a monovalent group $CH_2=C(R^a)$- that can undergo a free radical polymerization reaction. The group $R^a$ is often hydrogen or an alkyl.

As used herein, the term "(meth)acrylic" refers to methacrylic, acrylic, or a mixture thereof. Likewise the term "(meth)acrylate" refers to methacrylate, acrylate, or a mixture thereof. The term "(meth)acrylic copolymer" refers to a polymeric material formed from two or more monomers, wherein greater than one of the monomers has a (meth)acryloyl

group, which is a group of formula $CH_2=C(R^b)-(CO)-$ where $R^b$ is hydrogen or methyl. In many embodiments, at least 50 weight percent of the monomers included in the monomer mixture used to prepare the (meth)acrylic copolymer have a (meth)acryloyl group.

The term "epoxide" refers to the following divalent group

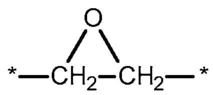

where each asterisk indicates the point of attachment of the epoxide group to the rest of the molecule.

In many embodiments, the (meth)acrylic copolymer having the pendant carboxylic acid groups (-(CO)-OH groups) is an elastomeric material and the cured composition is a pressure-sensitive adhesive. To prepare a suitable pressure-sensitive adhesive, the crosslinking density of the cured composition needs to be controlled. If the crosslinked density is too high, the peel strength of the cured composition may be too low to function as a pressure-sensitive adhesive. One method of lowering the crosslink density is to use less of an epoxidized vegetable oil (EVO) as the crosslinker in the curable composition. This is contrary, however, to the desired use of more renewable material in the curable composition. The crosslink density can be lowered while increasing the fraction of the EVO included in the curable composition by lowering the number of epoxide groups per molecule in the EVO. The number of epoxide groups per molecule can be reduced by reacting some, but not all, of the epoxide groups with a mono-functional carboxylic acid, which is a compound having a single -(CO)-OH group.

The acid-modified EVO is a vegetable oil derivative. Vegetable oils are typically a mixture of various compounds such as monoglycerides, diglycerides, and triglycerides. In most embodiments, the majority of the compounds in the vegetable oil are triglycerides that can be represented by Formula (I).

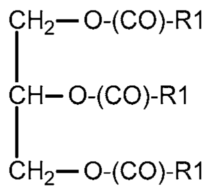

(I)

In Formula (I), each R1 group is aliphatic. Although any R1 group can be unsaturated (i.e., one or more carbon-carbon double bonds) or saturated (i.e., no carbon-carbon double bond), the compound of Formula (I) typically has at least three carbon-carbon double bonds. That is, each R1 is typically either an alkenyl group having 1 or more double bonds or an alkyl group. The number of carbon-carbon double bonds in each R1 group is often in a range of 0 to 6, 1 to 6, 0 to 5, 1 to 5, 0 to 4, 1 to 4, 0 to 3, 1 to 3, or 0 to 2. Overall, the compound of Formula I often has at least 3, at least 4, or at least 5 carbon-carbon double bonds. Each R1 independently has at least 8 carbon atoms. For example, each R1 group can have at least 10 carbon atoms, at least 12 carbon atoms, or at least 16 carbon atoms. Each R1 independently has up to 30 carbon atoms, up to 24 carbon atoms, or up to 20 carbon atoms. In some embodiments, each R1 independently has 8 to 24 carbon atoms, 8 to 20 carbon atoms, 8 to 16 carbon atoms, or 8 to 12 carbon atoms.

Suitable vegetable oils that contain triglycerides of Formula (I) include, but are not limited to, soybean oil, sunflower oil, linseed oil, rapseed oil, canola oil, olive oil, palm oil, peanut oil, coconut oil, cottonseed oil, safflower oil, sesame oil, corn oil, sunflower oil, other polyunsaturated vegetable oil, and mixtures thereof. In many embodiments, the vegetable oil is soybean oil, linseed oil, or mixtures thereof.

In some specific embodiments, the vegetable oil is soybean oil. Although soybean oil contains a plurality of compounds of Formula (I), each R1 group typically has 0 to 4, 1 to 4, 0 to 3, or 1 to 3 carbon-carbon double bonds. Most commonly, each R1 group has 1 or 2 carbon-carbon double bond. On average, there are often at least 3, at least 4, or at least 5 carbon-carbon double bonds per triglyceride molecule. An example triglyceride can be represented by the following structure or other similar structures.

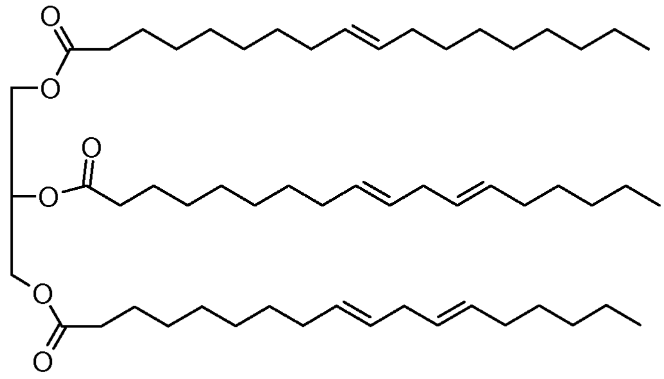

The vegetable oil of Formula (I) can be treated with a peroxy compound, for example, to form epoxide groups (i.e., oxirane groups). This reaction is described further in various references such as in the reference Sienel et al., Epoxides, Ullmann's Encyclopedia of Industrial Chemistry, Vol. 13, pages 139-154 (2000). The carbon-carbon double bonds can be partially or fully epoxidized. The EVO can be of Formula (II).

$CH_2$— O-(CO)-R2
|
CH— O-(CO)-R2
|
$CH_2$— O-(CO)-R2

(II)

In Formula (II), each R2 group is aliphatic. Often, all of the carbon-carbon double bonds in the vegetable oil (e.g., all of the carbon-carbon double bonds in Formula (I)) are oxidized to epoxide groups. Each R2 group can be unsaturated or saturated but is often saturated. The number of epoxide groups in each R2 group is often in a range of 0 to 6, 1 to 6, 0 to 5, 1 to 5, 0 to 4, 1 to 4, 0 to 3, 1 to 3, or 0 to 2. Overall, the compound of Formula (II) often has at least 3, at least 4, or at least 5 epoxide groups. Each R2 independently has at least 8 carbon atoms. For example, the number of carbon atoms in each R2 group can be at least 10, at least 12, or at least 16. Each R2 independently has up to 30 carbon atoms, up to 24 carbon atoms, or up to 20 carbon atoms. In some embodiments, each R2 independently has 8 to 24 carbon atoms, 8 to 20 carbon atoms, 8 to 16 carbon atoms, or 8 to 12 carbon atoms.

If all of the epoxide groups in the example soybean oil triglyceride shown above are oxidized, the EVO can be represented by the following structure or other similar structures. The epoxidized soybean oil (ESO) is often saturated.

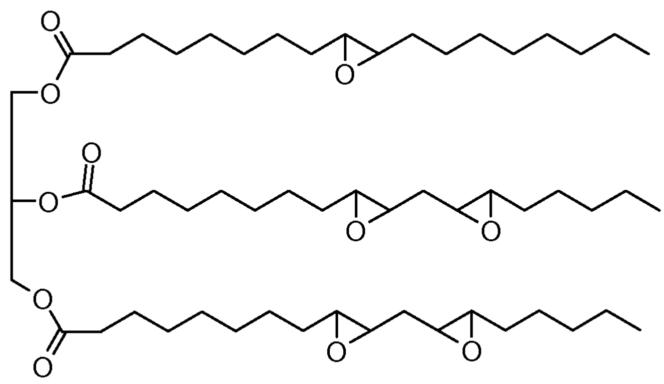

The epoxide content of the EVO can be expressed by an epoxy equivalent weight or epoxide number, which refers to the grams of material per mole of epoxide. The triglyceride can have any desired epoxy equivalent weight but it is often less than 300, less than 275, less than 250, or less than 225. The number can depend on the number of carbon-carbon double bonds that are not epoxidized during the oxidation process. Most of the commercially available EVO

materials are epoxidized soybean oil or epoxidized linseed oil. Commercially available epoxidized linseed oil often has an epoxy equivalent weight in a range of 130 to 200 or 135 to 180. Commercially available epoxidized soybean oils often have an epoxy equivalent weight in a range of 200 to 225.

In some embodiments, the preferred epoxidized vegetable oil is epoxidized linseed oil, epoxidized soybean oil, or a mixture thereof because these materials are commercially available. Example epoxidized linseed oils and epoxidized soybean oils include those commercially available under the trade designation DEHYSOL from Cognis (Dusseldorf, Germany), under the trade designation VIKOFLEX from Arkema (King of Prussia, PA, USA), and under the trade designation PLASTHALL from Hallstar (Chicago, IL, USA).

To form the acid-modified EVO, some but not all of the epoxide groups of the compound of Formula (II) are opened by reacting with a mono-functional carboxylic acid compound to form the acid-modified EVO. The acid-modified EVO has greater than one epoxide groups per molecule (or at least two epoxide groups per molecule, or greater than two epoxide groups per molecule), which is lower than the number of epoxide groups per molecule in the EVO of Formula (II). The remaining epoxide groups can react with the pendant carboxylic acid groups of the (meth)acrylic copolymer. This reaction ring opens the remaining epoxide groups and crosslinks the (meth)acrylic copolymer.

The mono-functional carboxylic acid compound used to modify the EVO is selected to be free of an ethylenically unsaturated bond. That is, the mono-functional carboxylic acid is not a monomer such as (meth)acrylic acid that can undergo a free radical polymerization reaction. Suitable mono-functional carboxylic acids are typically of Formula (III).

$$R3\text{-}(CO)\text{-}OH \qquad \text{(III)}$$

Group R3 in Formula (III) can be aliphatic, aromatic, or a combination thereof. In many embodiments, however, R3 is an aliphatic group that is linear, branched, cyclic, or a combination thereof. The group R3 typically has at least 2, at least 4, at least 6, or at least 10 carbon atoms and can have up to 24 or even greater, up to 20, up to 18, up to 16, or up to 14 carbon atoms.

In some embodiments, the R3 group is a linear alkyl group having 2 to 14 carbon atoms. Example alkyl carboxylic acids include, but are not limited to, acetic acid, propanoic acid, butanoic acid, pentanoic acid, hexanoic acid, heptanoic acid, octanoic acid, nonanoic acid, decanoic acid, undecanoic acid, dodecanoic acid (lauric acid), tridecanoic acid, and tetradecanoic acid. In other embodiments, the R3 group is a branched alkyl group having 2 to 24 carbons such as various 2-alkyl carboxylic acids, or an alkenyl group (suitable alkenyl groups do not have an ethylenically unsaturated group) with 1 to 3 carbon-carbon double bonds having 2 to 24 carbon atoms such as oleic acid. In still other embodiments, the R3 group is an aryl group. Example aryl carboxylic acids include, but are not limited to, benzoic acid or derivatives thereof (e.g., benzoic acid substituted with an alkyl group or other group that does not interfere with the reaction of the carboxylic acid with an epoxide group).

When the cured composition is a pressure-sensitive adhesive, it is often preferable that the mono-functional carboxylic acid is not crystalline at temperatures lower than 50°C. Suitable acids are often of Formula (III) where R3 is an alkyl group having 2 to 14 carbon atoms. The alkyl group can be linear, branched, cyclic, or a combination thereof but is often linear. Use of an acid that is crystalline at temperatures lower than 50°C may adversely affect the peel strength of the pressure-sensitive adhesive. In some curable compositions, it may be desirable to use an acid-modified carboxylic acid that is a renewable material (e.g., that is obtained from a plant or a plant-based material). For example, it can be preferable that the mono-functional carboxylic acid is lauric acid.

The amount of mono-functional carboxylic acid added to the EVO can be determined based on the epoxy equivalent weight of the EVO and the desired epoxy equivalent weight of the acid-modified EVO. The moles of mono-functional carboxylic acid added are less than the moles of epoxide groups in the EVO. The acid-modified EVO often has an epoxy equivalent weight equal to at least 300. This number can vary depending on the carbon-carbon double bond content of the original oil. The epoxy equivalent weight can be at least 400, at least 450, at least 500, at least 600, at least 800, or at least 1000 and can be up to 2000 or even higher, up to 1800, up to 1600, up to 1400, or up to 1200. In some embodiments, the epoxy equivalent weight is in a range of 300 to 2000, in a range of 400 to 2000, or in a range of 450 to 1800.

Because the EVO is typically a mixture of compounds, the acid-modified EVO will likewise be a mixture of compounds. On average, however, the acid-modified EVO contains greater than one epoxide group per molecule, at least two epoxide groups per molecule, or greater than two epoxide groups per molecule. In some embodiments, it may be preferable that at least 80 weight percent, at least 85 weight percent, or at least 90 weight percent of the acid-modified EVO has greater than one epoxide groups per molecule or at least two epoxide groups per molecule. For example, it may be preferable that at least 80 weight percent, at least 85 weight percent, or at least 90 weight percent of the acid-modified EVO has greater than one epoxide groups per molecule or at least two epoxide groups per molecule. For example, acid-modified EVO often has 2 to 3 epoxide groups per molecule.

The acid-modified EVO is prepared by reacting the mono-functional carboxylic acid and the EVO at an elevated temperature (e.g., a temperature above room temperature, which is approximately 20°C to 25°C). In the absence of a

catalyst, the reactants are often heated at a temperature in a range of 120°C to 300°C. In the presence of a suitable catalyst, the reaction temperature can be as low as about 80°C. That is, the reaction temperature can be in a range of 80°C to 300°C, in a range of 80°C to 250°C, in a range of 80°C to 225°C, in a range of 80°C to 200°C, or in the range of 100°C to 175°C. The reaction time can vary from about 30 minutes to 24 hours depending on the temperature selected and on whether or not a catalyst is used.

Suitable catalysts for the ring opening reaction of the epoxide groups of the EVO with the mono-functional carboxylic acid are typically strong Lewis acids. Example catalysts include, but are not limited to, tertiary amines, metal salts or complexes, quaternary ammonium compounds, quaternary phosphonium compounds, phosphines, alkali metal hydroxides, and the like. Further details regarding specific suitable catalysts are provided in PCT Application Publication WO 2013/086004 (Kalchang et al.).

The curable composition often contains at least 40 weight percent acid-modified EVO based on the total weight of the acid-modified EVO and the (meth)acrylic copolymer. For example, the amount of acid-modified EVO can be at least 45 weight percent, at least 50 weight percent, or at least 55 weight percent and can be up to 75 weight percent or even higher, up to 70 weight percent, up to 65 weight percent, or up to 60 weight percent.

The (meth)acrylic copolymer that is combined with the acid-modified EVO in the curable composition is typically a copolymer prepared from a monomer mixture that includes (a) a carboxylic acidic monomer having a single ethylenically unsaturated group and (b) a non-polar monomer having a single ethylenically unsaturated group. The non-polar monomer often has a (meth)acryloyl group. The monomer mixture is usually selected to provide a (meth)acrylic copolymer that is an elastomeric material having a glass transition temperature (Tg) no greater than 10°C. For example, the Tg is often no greater than 0°C, no greater than -10°C, no greater than -20°C, or no greater than -30°C. The glass transition temperature can be measured using a Differential Scanning Calorimeter.

The carboxylic monomer having a single ethylenically unsaturated group can be, for example, (meth)acrylic acid, itaconic acid, fumaric acid, crotonic acid, citraconic acid, maleic acid, 2-carboxyethyl acrylate. In many embodiments, the acid monomer is (meth)acrylic acid. In some specific embodiments, the acid monomer is acrylic acid.

The carboxylic acid monomer provides the pendant carboxylic acid groups that can react with the remaining epoxide groups of the acid-modified EVO to crosslink the (meth)acrylic copolymer. Additionally, the carboxylic acid groups tend to increase adhesion of the (meth)acrylic copolymer to an adjacent layer such as a backing layer or other type of substrate, to enhance the cohesive strength of the cured composition, or both. The monomer mixture used to form the (meth)acrylic copolymer often contains up to 15 weight percent carboxylic acid monomer based on the total weight of monomers in the monomer mixture. If higher amounts of the carboxylic acid monomer are used, the resulting cured composition often cannot function as a pressure-sensitive adhesive. The monomer mixture can include up to 12 weight percent, up to 10 weight percent, up to 8 weight percent, or up to 5 weight percent carboxylic acid monomer. The monomer mixture typically contains at least 1 weight percent carboxylic acid monomer to ensure that there are sufficient carboxylic acid groups (-COOH groups) for reacting with the remaining epoxide groups in the acid-modified EVO. The monomer mixture often contains at least 2 weight percent, at least 5 weight percent, or at least 7 weight percent carboxylic acid monomer. The amount of carboxylic acid monomer included in the monomer mixture is often in a range of 1 to 15 weight percent, 1 to 12 weight percent, 3 to 15 weight percent, 5 to 15 weight percent, 3 to 12 weight percent, or 7 to 12 weight percent based on the total weight of monomers in the monomer mixture.

Some commonly used non-polar monomers with a single ethylenically unsaturated group are (meth)acrylate esters such as alkyl (meth)acrylates, aryl (meth)acrylates, aryl substituted alkyl (meth)acrylates, aryloxy substituted alkyl (meth)acrylates. Suitable alkyl (meth)acrylates often have an alkyl group with 1 to 32 carbon atoms, 1 to 20 carbon atoms, 1 to 18 carbon atoms, 1 to 12 carbon atoms, 1 to 10 carbon atoms, 1 to 6 carbon atoms, or 1 to 4 carbon atoms. Example alkyl (meth)acrylates include, but are not limited to, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, isopentyl (meth)acrylate (i.e., isoamyl (meth)acrylate), 3-pentyl (meth)acrylate, 2-methyl-1-butyl (meth)acrylate, 3-methyl-1-butyl (meth)acrylate, n-hexyl (meth)acrylate, isohexyl (meth)acrylate, 2-methyl-1-pentyl (meth)acrylate, 3-methyl-1-pentyl (meth)acrylate, 4-methyl-2-pentyl (meth)acrylate, 2-ethyl-1-butyl (meth)acrylate, 2-methyl-1-hexyl (meth)acrylate, 3,5,5-trimethyl-1-hexyl (meth)acrylate, cyclohexyl (meth)acrylate, 3,3,5-trimethylcyclohexyl (meth)acrylate, 3-heptyl (meth)acrylate, n-octyl (meth)acrylate, isooctyl (meth)acrylate, 2-octyl (meth)acrylate, 2-ethyl-1-hexyl (meth)acrylate, isobornyl (meth)acrylate, n-decyl (meth)acrylate, isodecyl (meth)acrylate, 3,7-dimethyl-6-octenyl (meth)acrylate, 3,7-dimethyloctanyl (meth)acrylate, 2-propylheptyl (meth)acrylate, isononyl (meth)acrylate, ndodecyl (meth)acrylate (i.e., lauryl (meth)acrylate), n-tridecyl (meth)acrylate, isotridecyl (meth)acrylate, stearyl (meth)acrylate, isostearyl (meth)acrylate, 3,7-dimethyl-octyl (meth)acrylate, 1-octadecyl (meth)acrylate, 17-methyl-1-heptadecyl (meth)acrylate, 1-tetradecyl (meth)acrylate, and docosyl (meth)acrylate. Some exemplary branched alkyl (meth)acrylates are (meth)acrylic acid esters of 2-alkyl alcohols having 12 to 32 carbon atoms as described in PCT Patent Application Publication WO 2011/119363 (Clapper et al.).

Suitable aryl (meth)acrylates often have an aryl group that has 6 to 20 carbon atoms or 6 to 12 carbon atoms. Suitable aryl substituted alkyl (meth)acrylates often have an alkyl group with 1 to 10 carbon atoms or 1 to 6 carbon atoms

and an aryl group with 6 to 20 carbon atoms or 6 to 12 carbon atoms. Suitable aryloxy substituted alkyl (meth)acrylates often have an alkyl group with 1 to 10 carbon atoms or 1 to 6 carbon atoms and an aryloxy group with 6 to 20 carbon atoms or 6 to 12 carbon atoms. As used herein, the term "aryl" refers to a monovalent group that includes at least one aromatic carbocyclic ring. The aryl group can include additional ring structures fused or bonded to the aromatic carbocyclic ring. Any additional ring structures can be saturated, partially unsaturated, or unsaturated. As used herein, the term "aryloxy" refers to a monovalent group of formula -OAr where Ar is an aryl group as defined above. Examples of aryl substituted alkyl (meth)acrylates or aryloxy substituted alkyl (meth)acrylates include 2-biphenylhexyl (meth)acrylate, benzyl (meth)acrylate, and 2-phenoxy ethyl (meth)acrylate. An example aryl (meth)acrylate is phenyl (meth)acrylate.

In addition to the carboxylic acid monomer and the non-polar monomer, other optional monomers such as various polar monomers can be included in the monomer mixture. Suitable polar monomers include those with a hydroxyl group, a primary amido group, a secondary amido group, a tertiary amido group, or an ether group (i.e., a group containing at least one alkylene-oxy-alkylene group of formula -R-O-R- where each R is an alkylene having 1 to 4 carbon atoms). The polar group can be in the form of a salt. For example, the acidic group can be in the form of an anion and can have a cationic counter ion. In many embodiments, the cationic counter ion is an alkaline metal ion (e.g., sodium, potassium, or lithium ion), an alkaline earth ion (e.g., calcium, magnesium, or strontium ion), an ammonium ion, or an ammonium ion substituted with one or more alkyl or aryl groups. The various amido groups can be in the form of a cation and can have an anionic counter ion. In many embodiments, the anionic counter ion is a halide, acetate, formate, sulfate, phosphate.

Exemplary polar monomers with a hydroxyl group include, but are not limited to, hydroxyalkyl (meth)acrylates (e.g., 2-hydroxyethyl (meth)acrylate, 2-hydroxypropyl (meth)acrylate, 3-hydroxypropyl (meth)acrylate, and 4-hydroxybutyl (meth)acrylate), hydroxyalkyl (meth)acrylamides (e.g., 2-hydroxyethyl (meth)acrylamide or 3-hydroxypropyl (meth)acrylamide), ethoxylated hydroxyethyl (meth)acrylate (e.g., monomers commercially available from Sartomer (Exton, PA, USA) under the trade designation CD570, CD571, and CD572), and aryloxy substituted hydroxyalkyl (meth)acrylates (e.g., 2-hydroxy-2-phenoxypropyl (meth)acrylate).

Exemplary polar monomers with a primary amido group include (meth)acrylamides. Exemplary polar monomers with secondary amido groups include, but are not limited to, N-alkyl (meth)acrylamides such as N-methyl (meth)acrylamide, N-ethyl (meth)acrylamide, N-isopropyl (meth)acrylamide, N-tert-octyl (meth)acrylamide, or N-octyl (meth)acrylamide. Exemplary polar monomers with a tertiary amido group include, but are not limited to, N-vinyl caprolactam, N-vinyl-2-pyrrolidone, (meth)acryloyl morpholine, and N,N-dialkyl (meth)acrylamides such as N,N-dimethyl (meth)acrylamide, N,N-diethyl (meth)acrylamide, N,N-dipropyl (meth)acrylamide, and N,N-dibutyl (meth)acrylamide.

Exemplary polar monomers with an ether group include, but are not limited to, alkoxylated alkyl (meth)acrylates such as ethoxyethoxyethyl (meth)acrylate, 2-methoxyethyl (meth)acrylate, and 2-ethoxyethyl (meth)acrylate; and poly(alkylene oxide) (meth)acrylates such as poly(ethylene oxide) (meth)acrylates and poly(propylene oxide) (meth)acrylates. The poly(alkylene oxide) acrylates are often referred to as poly(alkylene glycol) (meth)acrylates. These monomers can have any suitable end group such as a hydroxyl group or an alkoxy group. For example, when the end group is a methoxy group, the monomer can be referred to as methoxy poly(ethylene glycol) (meth)acrylate.

Any other monomers compatible with (e.g., miscible with) the monomers in the first monomer mixture can be included. Examples of other monomers include various aryl (meth)acrylate (e.g., phenyl (meth)acrylate), vinyl ethers, vinyl esters (e.g., vinyl acetate), olefinic monomers (e.g., ethylene propylene, or butylene), styrene, styrene derivatives (e.g., alpha-methyl styrene). The monomer mixture typically does not include monomers with multiple ethylenically unsaturated bonds.

In many embodiments, the monomer mixture includes 1 to 15 weight percent carboxylic acid monomer and 85 to 99 weight percent non-polar monomer. For example, the monomer mixture can contain 3 to 15 weight percent carboxylic acid monomer and 85 to 97 weight percent non-polar monomer, 3 to 12 weight percent carboxylic acid monomer and 88 to 97 weight percent non-polar monomer, or 5 to 15 weight percent carboxylic acid monomer and 85 to 95 weight percent non-polar monomer.

In other embodiments, the monomer mixture contains other optional monomers in addition to the carboxylic acid monomer and the non-polar monomer. These other optional monomers can be any of those described above. The monomer mixture for such embodiments can include 1 to 15 weight percent carboxylic acid monomer, 1 to 25 weight percent optional monomer, and 60 to 98 weight percent polar monomer.

In some more specific embodiments, the (meth)acrylic copolymer is prepared from monomers that are based or that can be based on renewable materials. For example, the carboxylic acid monomer can be (meth)acrylic acid, which can be a plant-based material. More specifically, glycerol derived from hydrolysis of soybean oil or other triglyceride oils can be converted into (meth)acrylic acid. Alternatively, glucose can be produced by the enzymatic hydrolysis of corn starch to form lactic acid. The lactic acid can then be dehydrated to (meth)acrylic acid. In still another process, glucose can be bio-fermented to 3-hydroxypropionic acid as an intermediate. This intermediate can be dehydrated to form (meth)acrylic acid. Further, the non-polar monomer can be derived from plant-based material. These include, for example, (meth)acrylic esters of 2-octanol (for example, see U.S. Patent No. 7,385,020 (Anderson et al.).

In addition to the monomer mixture, the reaction mixture used to prepare the (meth)acrylic copolymer typically includes a free radical initiator to commence polymerization of the monomers. The free radical initiator can be a photoinitator or a thermal initiator. Suitable thermal initiators include various azo compounds such as those commercially available under the trade designation VAZO from E. I. DuPont de Nemours Co. (Wilmington, DE, USA) including VAZO 67, which is 2,2'-azobis(2-methylbutane nitrile), VAZO 64, which is 2,2'-azobis(isobutyronitrile) and which can be referred to as AIBN, VAZO 52, which is (2,2'-azobis(2,4-dimethylpentanenitrile), and VAZO 88, which is 1,1'-azobis(cyclohexanecarbonitrile); various peroxides such as benzoyl peroxide, cyclohexane peroxide, lauroyl peroxide, di-tert-amyl peroxide, tert-butyl peroxy benzoate, di-cumyl peroxide, and peroxides commercially available from Atofina Chemical, Inc. (Philadelphia, PA) under the trade designation LUPERSOL (e.g., LUPERSOL 101, which is 2,5-bis(tert-butylperoxy)-2,5-dimethylhexane, and LUPERSOL 130, which is 2,5-dimethyl-2,5-di-(tert-butylperoxy)-3-hexyne); various hydroperoxides such as tert-amyl hydroperoxide and tert-butyl hydroperoxide; and mixtures thereof.

In many embodiments, a photoinitiator is used. Some exemplary photoinitiators are benzoin ethers (e.g., benzoin methyl ether or benzoin isopropyl ether) or substituted benzoin ethers (e.g., anisoin methyl ether). Other exemplary photoinitiators are substituted acetophenones such as 2,2-diethoxyacetophenone or 2,2-dimethoxy-2-phenylacetophenone (commercially available under the trade designation IRGACURE 651 from BASF Corp. (Florham Park, NJ, USA) or under the trade designation ESACURE KB-1 from Sartomer (Exton, PA, USA)). Still other exemplary photoinitiators are substituted alpha-ketols such as 2-methyl-2-hydroxypropiophenone, aromatic sulfonyl chlorides such as 2-naphthalenesulfonyl chloride, and photoactive oximes such as 1-phenyl-1,2-propanedione-2-(O-ethoxycarbonyl)oxime. Other suitable photoinitiators include, for example, 1-hydroxycyclohexyl phenyl ketone (commercially available under the trade designation IRGACURE 184), bis(2,4,6-trimethylbenzoyl)phenylphosphineoxide (commercially available under the trade designation IRGACURE 819), 1-[4-(2-hydroxyethoxy)phenyl]-2-hydroxy-2-methyl-1-propane-1-one (commercially available under the trade designation IRGACURE 2959), 2-benzyl-2-dimethylamino-1-(4-morpholinophenyl)butanone (commercially available under the trade designation IRGACURE 369), 2-methyl-1-[4-(methylthio)phenyl]-2-morpholinopropan-1-one (commercially available under the trade designation IRGACURE 907), and 2-hydroxy-2-methyl-1-phenyl propan-1-one (commercially available under the trade designation DAROCUR 1173 from BASF Corp.

The reaction mixture may optionally further contain a chain transfer agent to control the molecular weight of the resultant (meth)acrylic copolymer. Examples of useful chain transfer agents include, but are not limited to, carbon tetrabromide, alcohols (e.g., ethanol and isopropanol), mercaptans or thiols (e.g., lauryl mercaptan, butyl mercaptan, ethanethiol, isooctylthioglycolate, 2-ethylhexyl thioglycolate, 2-ethylhexyl mercaptopropionate, and ethyleneglycol bisthioglycolate), and mixtures thereof. If used, the reaction mixture may include up to 0.5 weight percent of a chain transfer agent based on a total weight of monomers. For example, the first reaction mixture can contain 0.005 to 0.5 weight percent, 0.01 to 0.5 weight percent, 0.01 to 0.2 weight percent, or 0.01 to 0.1 weight percent chain transfer agent.

The polymerization of the reaction mixture to form the (meth)acrylic copolymer can occur in the presence or absence of an organic solvent. If an organic solvent is included in the reaction mixture, the amount is often selected to provide the desired viscosity. Examples of suitable organic solvents include, but are not limited to, methanol, tetrahydrofuran, ethanol, isopropanol, heptane, acetone, methyl ethyl ketone, methyl acetate, ethyl acetate, toluene, xylene, and ethylene glycol alkyl ether. Those solvents can be used alone or as mixtures thereof. In some embodiments, the polymerization occurs with little or no organic solvent present.

The (meth)acrylic copolymer can be prepared by a variety of conventional free radical polymerization methods, including solution, bulk (i.e., with little or no solvent), dispersion, emulsion, and suspension processes. The particular method used may be influenced by the use of the final pressure-sensitive adhesive composition.

In one method of making the (meth)acrylic copolymer, the monomer mixture is formed and combined with a thermal initiator in the presence of an organic solvent. The organic solvent is often added to allow efficient mixing of the components of the reaction mixture and to provide a sufficiently low viscosity for easy removal of the polymeric material from the reaction vessel. The reaction mixture is typically purged with nitrogen and then sealed within the reaction vessel. The reaction vessel can be placed in a water bath or heated by any suitable means at a temperature in a range of 50°C to 100°C for up to 24 hours or more.

When it is desirable to minimize the amount of organic solvent used in the reaction mixture, the (meth)acrylic copolymer can be prepared within a thermoplastic pouch that has been purged to remove oxygen. This method is further described in U.S. Patent Nos. 5,804,610 (Hamer et al.) and 6,294,249 (Hamer et al.).

The resulting product of the polymerization reaction is the (meth)acrylic copolymer, which is a random copolymer. This polymeric material often has a weight average molecular weight equal to at least 100,000 Daltons, at least 200,000 Daltons, at least 300,000 Daltons, at least 400,000 Daltons, at least 500,000 Daltons, or at least 600,000 Daltons. The weight average molecular weight can be up to 2,000,000 Daltons, up to 1,500,000 Daltons, or up to 1,000,000 Daltons. The weight average molecular weight can be varied, for example, by altering the amount of chain transfer agent included in the first reaction mixture.

The curable composition typically contains up to 60 weight percent (meth)acrylic copolymer or even larger amounts. In many embodiments, it is desirable to maximize the amount of renewable material included in the curable

composition. If the (meth)acrylic copolymer is prepared using renewable monomers such as (meth)acrylic acid and 2-octyl (meth)acrylate, larger amounts of the (meth)acrylic copolymer can be included in the curable compositions. The curable compositions often contain 25 to 60 weight percent, 25 to 55 weight percent, 25 to 50 weight percent, or 30 to 50 weight percent (meth)acrylic copolymer. The amount of the (meth)acrylic copolymer is based on the total weight of the (meth)acrylic copolymer and the acid-modified EVO.

In some embodiments, curable composition contains 40 to 75 weight percent acid-modified EVO and 25 to 60 weight percent (meth)acrylic copolymer based on the total weight of the acid-modified EVO and the (meth)acrylic copolymer. For example, the curable composition can contain 45 to 75 weight percent acid-modified EVO and 25 to 55 weight percent (meth)acrylic copolymer, 50 to 75 weight percent acid-modified EVO and 25 to 50 weight percent (meth)acrylic copolymer, or 50 to 70 weight percent acid-modified EVO and 30 to 50 weight percent (meth)acrylic copolymer.

The curable compositions can include an optional catalyst. If a catalyst is added, the curing temperature can be lowered. The curing temperature refers to the reaction temperature used to ring open the epoxide groups of the acid-modified EVO with the pendant carboxylic acid groups of the (meth)acrylic copolymer. Suitable catalysts tend to be strong Lewis acids such as those described above for opening the epoxide ring with the mono-functional carboxylic acid. The amount of the catalyst is typically less than 1 weight percent, less than 0.5 weight percent, less than 0.3 weight percent, less than 0.2 weight percent, less than 0.1 weight percent, less than 0.05 weight percent, or less than 0.01 weight percent based on the total weight of the (meth)acrylic copolymer and acid-modified EVO.

Other optional components can be included in the curable composition. When the cured composition is a pressure-sensitive adhesive, a tackifier (i.e., tackifying agent or tackifying resin) can be added to modify the Tg, to modify the storage modulus, and to alter the tackiness of the pressure-sensitive adhesive. The tackifier is typically selected to be miscible with the elastomeric material. Either solid or liquid tackifiers can be added. Solid tackifiers generally have a number average molecular weight (Mn) of 10,000 grams per mole or less and a softening point above about 70 °C. Liquid tackifiers are viscous materials that have a softening point of about 0 °C to about 70 °C.

Suitable tackifying resins include rosin resins such as rosin acids and their derivatives (e.g., rosin esters); terpene resins such as polyterpenes (e.g., alpha pinene-based resins, beta pinene-based resins, and limonene-based resins) and aromatic-modified polyterpene resins (e.g., phenol modified polyterpene resins); coumarone-indene resins; and petroleum-based hydrocarbon resins such as C5-based hydrocarbon resins, C9-based hydrocarbon resins, C5/C9-based hydrocarbon resins, and dicyclopentadiene-based resins. These tackifying resins, if added, can be hydrogenated to lower their color contribution to the pressure-sensitive adhesive composition. Combinations of various tackifiers can be used, if desired.

In many embodiments, the tackifier is a rosin ester or includes a rosin ester.
Tackifiers that are rosin esters are the reaction products of various rosin acids and alcohols.
These include, but are not limited to, methyl esters of rosin acids, triethylene glycol esters of rosin acids, glycerol esters of rosin acids, and pentaertythritol esters of rosin acids. These rosin esters can be hydrogenated partially or fully to improve stability and reduce their color contribution to the pressure-sensitive adhesive composition. The rosin resin tackifiers are commercially available, for example, from Eastman Chemical Company (Kingsport, TN, USA) under the trade designations PERMALYN, STAYBELITE, and FORAL as well as from Newport Industries (London, England) under the trade designations NUROZ and NUTAC. A fully hydrogenated rosin resin is commercially available, for example, from Eastman Chemical Company under the trade designation FORAL AX-E. A partially hydrogenated rosin resin is commercially available, for example, from Eastman Chemical Company under the trade designation STAYBELITE-E.

Tackifiers that are hydrocarbon resins can be prepared from various petroleum-based feed stocks. These feedstocks can be aliphatic hydrocarbons (mainly C5 monomers with some other monomers present such as a mixture of trans-1,3-pentadiene, cis-1,3-pentadiene, 2-methyl-2-butene, dicyclopentadiene, cyclopentadiene, and cyclopentene), aromatic hydrocarbons (mainly C9 monomers with some other monomers present such as a mixture of vinyl toluenes, dicyclopenetadiene, indene, methylstyrene, styrene, and methylindenes), or mixtures thereof. Tackifiers derived from C5 monomers are referred to as C5-based hydrocarbon resins while those derived from C9 monomers are referred to as C9-based hydrocarbon resins. Some tackifiers are derived from a mixture of C5 and C9 monomers or are a blend of C5-based hydrocarbon tackifiers and C9-based hydrocarbon tackifiers. These tackifiers can be referred to as C5/C9-based hydrocarbon tackifiers. Any of these resins can be partially or fully hydrogenated to improve their color and thermal stability.

The C5-based hydrocarbon resins are commercially available from Eastman Chemical Company under the trade designations PICCOTAC and EASTOTAC, from Cray Valley (Exton, PA, USA) under the trade designation WINGTACK, from Neville Chemical Company (Pittsburg, PA, USA) under the trade designation NEVTAC LX, and from Kolon Industries, Inc. (South Korea) under the trade designation HIKOREZ. The C5-based hydrocarbon resins with various degrees of hydrogenation are commercially available from Eastman Chemical under the trade designation EASTOTACK.

The C9-based hydrocarbon resins are commercially available from Eastman Chemical Company under the trade designation PICCO, KRISTLEX, PLASTOLYN, and PICCOTAC, and ENDEX, from Cray Valley (Exton, PA, USA)

under the trade designations NORSOLENE, from Ruetgers N.V. (Belgium) under the trade designation NOVAREZ, and from Kolon Industries, Inc. (South Korea) under the trade designation HIKOTAC. These resins can be partially or fully hydrogenated. Prior to hydrogenation, the C9-based hydrocarbon resins are often about 40 percent aromatic as measured by proton Nuclear Magnetic Resonance. Hydrogenated C9-based hydrocarbon resins are commercially available, for example, from Eastman Chemical under the trade designations REGALITE and REGALREZ that are 50 to 100 percent (e.g., 50 percent, 70 percent, 90 percent, and 100 percent) hydrogenated. The partially hydrogenated resins typically have some aromatic rings. Various C5/C9-based hydrocarbon tackifiers are commercially available from Arakawa (Germany) under the trade designation ARKON, from Zeon Corporation (Japan) under the trade designation QUINTONE, from Exxon Mobile Chemical (Houston, TX) under the trade designation ESCOREZ, and from Newport Industries (London, England) under the trade designation NURES or HREZ.

Liquid tackifiers are often polyterpenes. Suitable liquid polyterpene tackifiers are commercially available under the trade designation ZONAREZ A25 from Arizona Chemical Co. (Jacksonville, FL, USA).

Any of the tackifiers may be used in any suitable amount. In some embodiments, it may be desirable to include up to 60 weight percent, up to 50 weight percent, up to 40 weight percent, or up to 30 weight percent tackifier based on a total weight of the (meth)acrylic copolymer and the acid-modified EVO. For example, the tackifier can be present in an amount in a range of 0 to 60 weight percent, 1 to 60 weight percent, 0 to 50 weight percent, 1 to 50 weight percent, 0 to 40 weight percent, 1 to 40 weight percent, 0 to 30 weight percent, 1 to 30 weight percent, 0 to 20 weight percent, or 1 to 20 weight percent based on a total weight of the methacrylic copolymer and the acid-modified EVO.

Some curable compositions can include one or more plasticizers. The plasticizer is typically selected to be compatible with (i.e., miscible with) the other components in the composition such as the (meth)acrylic copolymer, the acid-modified EVO, and any optional tackifier. Suitable plasticizers include, but are not limited to, various polyalkylene oxides (e.g., polyethylene oxides or propylene oxides), adipic acid esters, formic acid esters, phosphoric acid esters, benzoic acid esters, phthalic acid esters, sulfonamides, and naphthenic oils. The plasticizers can be used in any desired amount such as in a range of 0 to 100 weight percent or in the range of 1 to 100 weight percent based on a total weight of the (meth)acrylic compound and the acid-modified EVO. For example, the plasticizer can be in a range of 0 to 50 weight percent, 5 to 50 weight percent, 1 to 25 weight percent, 5 to 25 weight percent, or 1 to 10 weight percent based on a total weight of the (meth)acrylic copolymer and the acid-modified EVO.

The curable composition can further include other optional components such as, for example, pigments, glass beads, polymer beads (e.g., expandable beads or expanded beads), hydrophobic or hydrophilic silica, calcium carbonate, fibers (e.g., glass, polymeric material, ceramic material, or mixtures thereof), blowing agents, fire retardants, oxidants, and stabilizers. These optional components can be added in any amount sufficient to obtain the properties desired to the particular use of the curable composition such as the pressure-sensitive adhesive.

An organic solvent can be included in the curable composition. Suitable solvents are those that can dissolve both the acid-modified EVO and the (meth)acrylic copolymer. Suitable solvents include, but are not limited to, methanol, tetrahydrofuran, ethanol, isopropanol, heptane, acetone, methyl ethyl ketone, methyl acetate, ethyl acetate, toluene, xylene, and ethylene glycol alkyl ether. The amount of organic solvent is often determined by the solubility of the various components and the desired viscosity of the curable composition. The solids of the curable composition are often in a range of 20 to 80 weight percent, 30 to 70 weight percent, in a range of 40 to 60 weight percent, or in a range of 45 to 55 weight percent based on a total weight of the curable composition.

In another aspect, an article is provided that includes a substrate and a cured composition layer positioned adjacent to the substrate. The cured composition is a reaction product of a curable composition.

The curable composition is typically applied as a layer adjacent to a substrate to provide an article. As used herein, the term "adjacent" refers to a first layer positioned near the second layer. The first and second layers can be in contact or can be separated from each other by another layer. For example, a substrate can be positioned adjacent to the curable composition if the substrate contacts the curable composition layer or is separated from the curable composition layer by another layer such as a primer layer or surface modification layer that increases the adhesion of the curable composition to the substrate. The curable composition is typically applied as a coating to a major surface of the substrate and the article is a substrate coated with the curable composition.

The curable composition can be applied to the substrate using any conventional
coating technique modified appropriately for the particular substrate. For example, the curable compositions can be applied to a variety of solid substrates by methods such as roller coating, flow coating, dip coating, spin coating, spray coating, knife coating, and die coating. These various methods of coating allow the curable compositions to be placed on the substrate at variable thicknesses thus allowing a wider range of use for the articles that are formed.

The cured composition is formed from the curable composition by the reaction of the pendant carboxylic acid groups of the (meth)acrylic copolymer with the epoxide groups of the acid-modified EVO. As described above for the ring opening of the epoxide groups of the EVO with the mono-functional carboxylic acid, the crosslinking (i.e., curing) reaction occurs at elevated temperatures. In the absence of a catalyst, the reactants are often heated at a temperature in a range of 120°C to 300°C. In the presence of a suitable catalyst, the reaction temperature can be as low as about

80°C. That is, the reaction temperature can be in a range of 80°C to 300°C, in a range of 80°C to 250°C, in a range of 80°C to 225°C, in a range of 80°C to 200°C, or in the range of 100°C to 175°C. The reaction time can vary from about 30 minutes to 24 hours depending on the temperature selected and on whether or not a catalyst is used.

Any suitable thickness can be used for the cured composition layer or layers. In many embodiments, each cured composition layer has a thickness no greater than 20 mils (500 micrometers), no greater than 10 mils (250 micrometers), no greater than 5 mils (125 micrometers), no greater than 4 mils (100 micrometers), no greater than 3 mils (75 micrometers), or no greater than 2 mils (50 micrometers). The thickness of the pressure-sensitive adhesive layer is often at least 0.5 mils (12.5micrometers) or at least 1 mil (25 micrometers). For example, the thickness can be in the range of 0.5 mils (2.5 micrometers) to 20 mils (500 micrometers), in the range of 0.5 mils (5 micrometers) to 10 mils (250 micrometers), in the range of 0.5 mils (12.5 micrometers) to 5 mils (125 micrometers), in the range of 1 mil (25 micrometers) to 3 mils (75 micrometers), or in the range of 1 mil (25 micrometers) to 2 mils (50 micrometers).

If the curable composition is cured after application to the substrate, the substrate needs to be selected of materials that can withstand the temperature used for curing. Typical substrates include those prepared from glass, ceramic materials, metals and metal alloys such as stainless steel, polymeric materials, and release liners. Examples of other suitable substrates include, but are not limited to, metal or metal oxide coated polymeric material, metal or metal oxide coated glass. The substrates can be rigid or flexible, colored or clear, and transparent or opaque. The substrate can have a smooth surface or can have a microreplicated surface.

Suitable polymeric materials for substrates are often selected so that they do not deform, shrink, or warp at the curing temperate. Some example polymeric substrates include, but are not limited to, polypropylene, polyethylene, polyvinyl chloride, polyesters such as polyethylene terephthalate, polyethylene naphthalate, and various aliphatic polyesters such as certain polylactic acids (e.g., polylactic acid-containing polymers with enhanced temperature resistance), cellulose acetate, cellulose triacetate, ethyl cellulose, cellulose, cellulose acetate. The polymeric material can be in the form of a film, foam, woven or non-woven web, molded part. In some embodiments, it may be desirable to select a substrate that is prepared from renewable materials.

Prior to deposition of the curable composition on the substrate, it may be desirable to treat the surface of the substrate to improve the adhesion. Such treatments are typically selected based on the nature of the materials in the curable composition and of the substrate and include primers and surface modifications (e.g., corona treatment and surface abrasion).

Alternatively, the curable composition can be deposited and cured on a release liner. The resulting cured composition can then be transferred to any desired substrate. The release liner is selected so that is can withstand the elevated curing temperatures without deformation, shrinking, or warping.

In many embodiments, the cured composition layer is a pressure-sensitive adhesive layer. The articles can have a single pressure-sensitive adhesive layer or can have multiple pressure-sensitive adhesive layers. Any of these articles can include a single substrate or can have multiple substrates. Any particular substrate can be a single layer of material or can have a multi-layer construction.

The articles can be conventional articles such as labels, tapes, signs, covers, marking indices, display components, touch panels, decorative sheets. Flexible backing materials having microreplicated surfaces are also contemplated.

Various embodiments are provided that include a curable composition, a cured composition, and an article.

Embodiment 1 is a curable composition. The curable composition includes (a) an acid-modified EVO having greater than one epoxide group per molecule and (b) a (meth)acrylic copolymer having a pendant carboxylic acid groups and being free of an epoxide group. The acid-modified EVO is a reaction product of (1) an EVO and (2) a monofunctional carboxylic acid that is free of an ethylenically unsaturated group.

Embodiment 2 is the curable composition of embodiment 1, wherein the (meth)acrylic copolymer is an elastomeric material.

Embodiment 3 is the curable composition of embodiment 1 or 2, wherein the acid-modified epoxidized vegetable oil is an acid-modified epoxidized soybean oil, an acid modified epoxidized linseed oil, or a mixture thereof.

Embodiment 4 is the curable composition of any one of embodiments 1 to 3, wherein the acid-modified epoxidized vegetable oil has an epoxy equivalent weight in a range of 400 to 1200.

Embodiment 5 is the curable composition of any one of embodiments 1 to 4, wherein the curable composition comprises 40 to 75 weight percent of the acid-modified epoxidized vegetable oil based on a total weight of the (meth)acrylic copolymer and the acid-modified epoxidized vegetable oil.

Embodiment 6 is the curable composition of any one of embodiments 1 to 5, wherein the (meth)acrylic copolymer is formed from a monomer mixture comprising (meth)acrylic acid and a non-polar monomer having a single ethylenically unsaturated group.

Embodiment 7 is the curable composition of embodiment 6, wherein the monomer mixture comprises 1 to 15 weight percent (meth)acrylic acid based on a total weight of monomers in the monomer mixture.

Embodiment 8 is the curable composition of any one of embodiments 1 to 7, wherein the acid-modified epoxidized vegetable oil has at least two epoxide groups per molecule.

Embodiment 9 is the curable composition of any one of embodiments 1 to 8, wherein the (meth)acrylic copolymer is formed from a reaction mixture comprising (meth)acrylic acid and 2-octyl (meth)acrylate.

Embodiment 10 is the curable composition of any one of embodiment 1 to 9, wherein the mono-functional carboxylic acid is a compound of Formula (III)

R3-(CO)-OH (III)

wherein R3 is a linear alkyl having 2 to 14 carbon atoms, a branched alkyl having 2 to 24 carbon atoms, or an alkenyl having 2 to 24 carbon atoms.

Embodiment 11 is a cured composition comprising a reaction product of a curable composition. The curable composition includes (a) an acid-modified EVO having greater than one epoxide group per molecule and (b) a (meth)acrylic copolymer having a pendant carboxylic acid groups and being free of an epoxide group. The acid-modified EVO is a reaction product of (1) an EVO and (2) a mono-functional carboxylic acid that is free of an ethylenically unsaturated group.

Embodiment 12 is the cured composition of embodiment 11, wherein the (meth)acrylic copolymer is an elastomeric material.

Embodiment 13 is the cured composition of embodiment 11 or 12, wherein the acid-modified epoxidized vegetable oil is an acid-modified epoxidized soybean oil, an acid modified epoxidized linseed oil, or a mixture thereof.

Embodiment 14 is the cured composition of any one of embodiments 11 to 13, wherein the acid-modified epoxidized vegetable oil has an epoxy equivalent weight in a range of 400 to 1200.

Embodiment 15 is the cured composition of any one of claims 11 to 14, wherein the curable composition comprises 40 to 75 weight percent of the acid-modified epoxidized vegetable oil based on a total weight of the (meth)acrylic copolymer and the acid-modified epoxidized vegetable oil.

Embodiment 16 is the cured composition of any one of embodiments 11 to 15, wherein the (meth)acrylic copolymer is formed from a monomer mixture comprising (meth)acrylic acid and a non-polar monomer having a single ethylenically unsaturated group.

Embodiment 17 is the cured composition of embodiment 16, wherein the monomer mixture comprises 1 to 15 weight percent (meth)acrylic acid based on a total weight of monomers in the monomer mixture.

Embodiment 18 is the cured composition of any one of embodiments 11 to 17, wherein the acid-modified epoxidized vegetable oil has at least two epoxide groups per molecule.

Embodiment 19 is the cured composition of any one of embodiments 11 to 18, wherein the (meth)acrylic copolymer is formed from a reaction mixture comprising (meth)acrylic acid and 2-octyl (meth)acrylate.

Embodiment 20 is the cured composition of any one of embodiments 11 to 19, wherein the mono-functional carboxylic acid is a compound of Formula (III)

R3-(CO)-OH (III)

wherein R3 is a linear alkyl having 2 to 14 carbon atoms, a branched alkyl having 2 to 24 carbon atoms, or an alkenyl having 2 to 24 carbon atoms.

Embodiment 21 is the cured composition of any one of embodiments 11 to 20, further comprising a tackifier.

Embodiment 22 is the cured composition of any one of embodiments 11 to 21, wherein the cured composition is a pressure-sensitive adhesive.

Embodiment 23 is an article comprising a substrate and a curable composition positioned adjacent to the substrate. The cured composition is a reaction product of a curable composition that includes (a) an acid-modified EVO having greater than one epoxide group per molecule and (b) a (meth)acrylic copolymer having a pendant carboxylic acid groups and being free of an epoxide group. The acid-modified EVO is a reaction product of (1) an EVO and (2) a mono-functional carboxylic acid that is free of an ethylenically unsaturated group.

Embodiment 24 is the article of embodiment 23, wherein the (meth)acrylic copolymer is an elastomeric material.

Embodiment 25 is the article of embodiment 23 or 24, wherein the acid-modified epoxidized vegetable oil is an acid-modified epoxidized soybean oil, an acid modified epoxidized linseed oil, or a mixture thereof.

Embodiment 26 is the article of any one of embodiments 23 to 25, wherein the acid-modified epoxidized vegetable oil has an epoxy equivalent weight in a range of 400 to 1200.

Embodiment 27 is the article of any one of claims 23 to 26, wherein the curable composition comprises 40 to 75 weight percent of the acid-modified epoxidized vegetable oil based on a total weight of the (meth)acrylic copolymer and the acid-modified epoxidized vegetable oil.

Embodiment 28 is the article of any one of embodiments 23 to 27, wherein the (meth)acrylic copolymer is formed

from a monomer mixture comprising (meth)acrylic acid and a non-polar monomer having a single ethylenically unsaturated group.

Embodiment 29 is the article of embodiment 28, wherein the monomer mixture comprises 1 to 15 weight percent (meth)acrylic acid based on a total weight of monomers in the monomer mixture.

Embodiment 30 is the article of any one of embodiments 23 to 29, wherein the acid-modified epoxidized vegetable oil has at least two epoxide groups per molecule.

Embodiment 31 is the article of any one of embodiments 23 to 30, wherein the (meth)acrylic copolymer is formed from a reaction mixture comprising (meth)acrylic acid and 2-octyl (meth)acrylate.

Embodiment 32 is the article of any one of embodiments 23 to 31, wherein the mono-functional carboxylic acid is a compound of Formula (III)

R3-(CO)-OH (III)

wherein R3 is a linear alkyl having 2 to 14 carbon atoms, a branched alkyl having 2 to 24 carbon atoms, or an alkenyl having 2 to 24 carbon atoms.

Embodiment 33 is the article of any one of embodiments 23 to 32, wherein the cured composition further comprising a tackifier.

Embodiment 34 is the article of any one of embodiments 23 to 33, wherein the cured composition is a pressure-sensitive adhesive.

## Examples

The particular materials and amounts thereof recited in these examples, as well as other conditions and details, should not be construed as being unduly limiting. These examples are merely for illustrative purposes only and are not meant to be limiting on the scope of the appended claims.

Solvents and other reagents used were obtained from Aldrich Chemical Company, Milwaukee, WI unless otherwise noted.

**Table 1:** Glossary of Materials

| Material | Description |
|---|---|
| 2-Octyl acrylate (2OA) | Alkyl acrylate monomer prepared according to Preparatory Example 1 of US Patent 7,385,020 (Anderson et al.). |
| Isooctyl acrylate (IA) | Alkyl acrylate obtained from 3M Company (St Paul, MN, USA) |
| Acrylic acid (AA) | Carboxylic acid monomer obtained from BASF Corporation (Florham Park, NJ, USA) |
| 2,2'-azobis(isobutyronitrile) (AIBN) | Thermal initiator obtained from Sigma-Aldrich (St Louis, MO, USA) |
| VAZO 67 (V-67), which is 2,2'-azobis(2-methylbutane nitrile) | Thermal initiator obtained from E.I. DuPont deNemours (Wilmington, DE, USA) |
| Ethyl acetate | Organic solvent obtained from VWR International (West Chester, PA, USA) |
| PLASTHALL ESO (ESO) | Epoxidized soybean oil (ESO) with an epoxy equivalent weight of 226 obtained from Hallstar (Chicago, IL, USA) |
| PLASTHALL ELO (ELO) | Epoxidized linseed oil (ELO) with an epoxy equivalent weight of 169 obtained from Hallstar (Chicago, IL, USA) |
| Lauric acid | Mono-functional carboxylic acid obtained from Penta Manufacturing (Livingston, NJ, USA) |
| NACURE XC-7231, which is ammonium antimony hexafluoride | Lewis acid catalyst obtained from King Industries (Norwalk, CT, USA) |
| ZONAREZ A25 | Polyterpene liquid tackifier obtained from Arizona Chemical Co. (Jacksonville, FL, USA) |

## Test Methods

Weight Percent Solids

Aluminum pans were weighed and the weights (W1) were recorded. Polymer solutions were poured into pre-weighed (W1) aluminum sample pans, and the samples (pan and polymer solution) were then reweighed (W2). The samples were then placed in an oven at 120 °C for 2 hours. The samples were then removed from the oven and allowed to cool. The samples were then reweighed (W3). The weight percent solids was calculated as: [100 (W2-W1)] ÷ (W3-W1).

Epoxy Equivalent Weight

The epoxy equivalent weight of the samples was measured and calculated using titrimetry according to the following procedure. Each sample (about 0.5-0.9 milliequivalents epoxy) was weighed to the nearest 0.0001 gram and was then dissolved in 50 mL chloroform in a 100 mL beaker and stirred magnetically until dissolved. A solution of 10 weight percent tetrabutylammonium iodide in acetic acid (10 mL) and acetic acid (20 mL) was added to the sample solution and stirred for approximately 15 minutes. A drop of 0.1 weight percent methyl violet indicator solution in acetic acid was then added. The mixture was titrated with a solution of 0.1 N perchloric acid in acetic acid to the potentiometric endpoint. The potentiometer was a Metrohm 751 TITRINO with a Metrohm 6.0229.010 SOLVOTRODE electrode that was obtained from Metrom AG, Switzerland. A blank was titrated using the sample procedure without the sample aliquot. The volume for the blank titration was subtracted from the total titration volume from the above procedure. Samples were run in triplicate.

Calculations were performed as shown below:

$$\%\ \text{Epoxy containing compound} = [100\,(V)(N)(\text{Eq. Wt.})] \div [1000\,(SW)]$$

$$\text{Epoxy Equivalent Weight (EEW)} = [1000\,(SW)] \div [(V)(N)]$$

where V is the Volume of titrant used in milliliters, N is the Normality of the titrant, SW is the Sample Weight in grams, and Eq. Wt. is the Equivalent Weight. The Equivalent Weight is the molecular weight of the epoxy containing compound in grams divided by the number of equivalents per gram.

Shear Value

The shear value of the adhesive films described in the Examples was measured using the following procedure. Sample strips were cut to 1.27 cm (0.5 inch) in width and then adhered to flat, rigid stainless steel plates with exactly 2.54 cm (1 inch) length of each sample adhesive film strip in contact with the plate to which it was adhered. A portion of the sample adhesive film was extended beyond the edge of the steel plate to provide a free end from which a weight could be hung. A weight of 2.0 kilograms (4.5 pounds) was rolled over the adhered portion to ensure intimate contact. Each of the resulting plates with the adhered film strip was placed at room temperature (23°C). After equilibrating for 15 minutes, a 1000 gram weight was hung from the free end of the adhered film strip, with the panel tilted 2 degrees from the vertical to ensure against any peeling forces. The time (in minutes) at which the weight fell, as a result of the adhesive film strip releasing from the plate was recorded as the Shear Value (minutes) at 23°C (1000 grams). The test was discontinued at 10,000 minutes if there was no shear failure. This was designated as 10,000+ minutes. Three specimens of each adhesive film strip were tested and the shear strength tests were averaged to obtain the reported shear value.

Peel Adhesion Force

Peel adhesion force is the force required to remove an adhesive-coated test specimen from a test panel at a specific angle and rate of removal. The following procedure was used to measure peel adhesion force:

(1) A test specimen 1.27 cm (0.5 inch) wide was applied to a horizontally positioned clean glass test plate. A 2.2 kilogram rubber roller was used to press a 10.2 cm (4 inch) length of specimen into firm contact with the glass surface.
(2) The free end of the specimen was doubled back, nearly touching itself, so the angle of removal was 180 degrees. The free end was attached to the adhesion tester scale.
(3) The glass test plate was clamped in the jaws of a tensile testing machine which was capable of moving the plate away from the scale at a constant rate of 228.6 cm (90 inches) per minute.

(4) For each adhesive composition, peel adhesion was measured on 4 to 6 samples in ounces per inch, the peel adhesion force values were averaged, and converted to Newtons per decimeter (N/dm).

**Preparatory Examples P1-P4: Preparation of (Meth)acrylic Copolymers - Solution Polymers (SP)**

Mixtures of 2-octyl acrylate (2OA) or isooctyl acrylate (IOA), acrylic acid (AA), AIBN or V-67, and ethyl acetate (EtOAc) with various compositions were placed into brown glass jars. The compositions are reported in Table 2 below. The solutions were sparged with nitrogen gas for 10 to 30 minutes and the bottles were subsequently capped. The capped bottles were then placed in a hot water bath at 60°C with shaking for 24 hours. The bottles were then opened to air. The weight percent solids were measured as described above.

**Table 2:** Preparation of (Meth)acrylic Copolymer - Solution Polymers (SP)

| Prep Example | Monomer Mixture | 2OA, grams | IOA, grams | AA, grams | AIBN, grams | V-67, grams | EtOAc, grams | Weight % Solids |
|---|---|---|---|---|---|---|---|---|
| P1 | 2OA/AA (95/5) | 232.8 | -- | 12.3 | 0.25 | -- | 455 | 36.3 |
| P2 | 2OA/AA (93/7) | 228.0 | -- | 17.2 | 0.25 | -- | 455 | 35.7 |
| P3 | 2OA/AA (90/10) | 220.5 | -- | 24.5 | 0.25 | -- | 455 | 35.1 |
| P4 | IOA/AA (90/10) | -- | 220.5 | 24.5 | -- | 0.25 | 455 | 34.2 |

**Preparatory Examples P5-P9: Preparation of Acid-Modified Epoxidized Vegetable Oil**

Mixtures of lauric acid (LA) and either ESO or ELO were placed into glass jars containing stir bars. The compositions are shown in Table 3 below. The jars were capped and the mixtures were stirred at 150°C for 24 hours. The epoxy equivalent weights of the reaction products and the original ESO or ELO were determined according to the test method above.

Table 3: Preparation of Acid-Modified Epoxidized Vegetable Oil

| Prep Example | ESO, grams | ELO, grams | LA, grams | Epoxy Equivalent Weight |
|---|---|---|---|---|
| Control 1 | 100% ESO | - | - | 226 |
| P5 | 30.3 | - | 6.2 | 475 |
| P6 | 30.3 | - | 7.8 | 613 |
| P7 | 30.3 | - | 9.3 | 1020 |
| Control 2 | - | 100% ELO | - | 169 |
| P8 | - | 50.0 | 35.3 | 1318 |
| P9 | - | 50.0 | 30.6 | 1674 |

**Examples 1-20 and Comparative Example C1: Cured Compositions**

Mixtures of (meth)acrylic copolymer (the solution polymers (SP)) of Preparatory Examples P1 to P4), acid-modified epoxidized vegetable oil (AMEVO) or ESO, and 1 weight percent of a NACURE XC-7231 solution (14 wt. % in propylene carbonate) were placed into glass jars with stir bars. The compositions are shown in Table 4 below. Ethyl acetate, if needed, was added to adjust the solutions to approximately 50 weight percent solids. The jars were capped and the solutions were stirred at 40°C to 50°C for approximately 30 minutes. The solutions were then knife coated onto Mitsubishi 3SAB primed polyethylene terephthalate (PET) film at a 0.10 mm wet coating thickness. The films were then placed in a 70°C oven for 30 to 60 minutes and then placed in a 150°C oven for 1 hour. The peel adhesion and shear value were measured of the cured compositions according to the test methods described above and are shown in Table 4 below.

**Table 4:** Cured Compositions

| Example | Prep Example | SP, grams | Prep Example | AMEVO, grams | NACURE XC-7231, grams | Peel Adhesion, (N/dm) | Shear Value (minutes) |
|---|---|---|---|---|---|---|---|
| 1 | 1 | 28.0 | 5 | 10.1 | 0.38 | 8.48 | 10000+ |
| 2 | 1 | 28.3 | 6 | 10.3 | 0.38 | 16.84 | 10000+ |
| 3 | 1 | 28.1 | 7 | 10.0 | 0.38 | 35.40 | 943 |
| 4 | 1 | 8.3 | 5 | 7.0 | 0.15 | 7.40 | 10000+ |
| 5 | 1 | 8.5 | 6 | 7.0 | 0.15 | 14.62 | 10000+ |
| 6 | 1 | 8.3 | 7 | 7.0 | 0.15 | 22.05 | 10000+ |
| 7 | 2 | 14.5 | 5 | 5.3 | 0.19 | 20.12 | 10000+ |
| 8 | 2 | 14.2 | 6 | 5.1 | 0.19 | 24.33 | 10000+ |
| 9 | 2 | 14.3 | 7 | 6.3 | 0.19 | 25.09 | 10000+ |
| C1 | 3 | 14.0 | ESO | 5.4 | 0.19 | 2.36 | 10,000+ |
| 10 | 3 | 14.1 | 5 | 5.4 | 0.19 | 24.04 | 10000+ |
| 11 | 3 | 14.0 | 6 | 5.5 | 0.19 | 30.32 | 10000+ |
| 12 | 3 | 14.0 | 7 | 5.4 | 0.19 | 37.50 | 10000+ |
| 13 | 3 | 8.7 | 5 | 7.3 | 0.15 | 19.48 | 10000+ |
| 14 | 3 | 8.8 | 6 | 7.2 | 0.15 | 27.48 | 10000+ |
| 15 | 3 | 8.6 | 7 | 7.4 | 0.15 | 31.04 | 10000+ |
| 16 | 1 | 28.5 | 8 | 10.0 | 0.38 | 16.31 | 6290 |
| 17 | 2 | 28.5 | 8 | 10.0 | 0.38 | 9.63 | 10,000+ |
| 18 | 1 | 28.5 | 9 | 10.0 | 0.38 | 9.52 | 957 |
| 19 | 4 | 28.5 | 8 | 10.0 | 0.38 | 19.92 | 10000+ |
| 20 | 4 | 28.5 | 7 | 10.0 | 0.38 | 7.44 | 2517 |

**Comparative Example C2**

A mixture of PLASTHALL ESO (4.13 grams), lauric acid (1.27 grams), Preparatory Example 3 (14.0 grams), and 0.19 grams of a NACURE XC-7231 solution (14 weight percent solution in propylene carbonate) was placed into a glass jar with a stir bar. The jar was capped and the solution was stirred at 50°C for approximately 30 minutes. The solution was then knife coated onto Mitsubishi 3SAB primed polyethylene terephthalate (PET) film at a 0.10 mm wet thickness. The coated film was then placed in a 70°C oven for 30 minutes and then in a 150°C oven for 1 hour. The peel adhesion was 2.00 N/dm and the shear value was 10,000+ minutes according to the test methods described above.

**Examples 21-22: Cured Compositions with Tackifier**

Mixtures of (meth)acrylic copolymer (the solution polymer of Preparatory Example P3), AMEVO (Preparatory Example 7), ZONAREZ A25, and 1 weight percent of a NACURE XC-7231 solution (14 wt. % in propylene carbonate) were placed into glass jars with stir bars. The compositions are shown in Table 5 below. Ethyl acetate, if needed, was added to adjust the solutions to approximately 50 weight percent solids. The jars were capped and the solutions were stirred at 40°C to 50°C for approximately 30 minutes. The solutions were then knife coated onto Mitsubishi 3SAB primed polyethylene terephthalate (PET) film at a 0.10 mm wet coating thickness. The films were then placed in a 70°C oven for 30 to 60 minutes and then placed in a 150°C oven for 1 hour. The peel adhesion and shear value were measured of the cured compositions according to the test methods described above and are shown in Table 5 below.

**Table 5:** Cured Compositions with Tackifier

| Example | Prep Example | SP, grams | Prep Example | AMEVO, grams | Zonerez A25, grams | NACURE XC-7231, grams | Peel Adhesion, (N/dm) | Shear Value (minutes) |
|---|---|---|---|---|---|---|---|---|
| 21 | 3 | 5.3 | 7 | 4.3 | 4.1 | 0.14 | 48.1 | 10000+ |
| 22 | 3 | 6.2 | 7 | 5.5 | 3.2 | 0.14 | 32.6 | 10000+ |

## Claims

1. A curable composition comprising:

   a) an acid-modified epoxidized vegetable oil comprising a reaction product of 1) an epoxidized vegetable oil and 2) a mono-functional carboxylic acid that is free of an ethylenically unsaturated group, wherein the acid-modified epoxidized vegetable oil has greater than one epoxide group per molecule; and
   b) a (meth)acrylic copolymer having pendant carboxylic acid groups, wherein the (meth)acrylic copolymer is free of an epoxide group.

2. The curable composition of claim 1, wherein the (meth)acrylic copolymer is an elastomeric material.

3. The curable composition of claim 1 or 2, wherein the acid-modified epoxidized vegetable oil is an acid-modified epoxidized soybean oil, an acid modified epoxidized linseed oil, or a mixture thereof.

4. The curable composition of any one of claims 1 to 3, wherein the acid-modified epoxidized vegetable oil has an epoxy equivalent weight in a range of 400 to 1200.

5. The curable composition of any one of claims 1 to 4, wherein the curable composition comprises 40 to 75 weight percent of the acid-modified epoxidized vegetable oil based on a total weight of the (meth)acrylic copolymer and the acid-modified epoxidized vegetable oil.

6. The curable composition of any one of claims 1 to 5, wherein the (meth)acrylic copolymer is formed from a monomer mixture comprising (meth)acrylic acid and a non-polar monomer having a single ethylenically unsaturated group.

7. The curable composition of claim 6, wherein the monomer mixture comprises 1 to 15 weight percent (meth)acrylic acid based on a total weight of monomers in the monomer mixture.

8. The curable composition of any one of claims 1 to 7, wherein the acid-modified epoxidized vegetable oil has at least two epoxide groups per molecule.

9. The curable composition of any one of claims 1 to 8, wherein the (meth)acrylic copolymer is formed from a reaction mixture comprising (meth)acrylic acid and 2-octyl (meth)acrylate.

10. The curable composition of any one of claims 1 to 9, wherein the mono-functional carboxylic acid is a compound of Formula (III)

    R3-(CO)-OH (III)

    wherein R3 is a linear alkyl having 2 to 14 carbon atoms, a branched alkyl having 2 to 24 carbon atoms, or an alkenyl having 2 to 24 carbon atoms.

11. A cured composition comprising a reaction product of a curable composition comprising:

    a) an acid-modified epoxidized vegetable oil comprising a reaction product of 1) an epoxidized vegetable oil and 2) a mono-functional carboxylic acid that is free of an ethylenically unsaturated group, wherein the acid-modified epoxidized vegetable oil has greater than one epoxide group per molecule; and
    b) a (meth)acrylic copolymer having pendant carboxylic acid groups, wherein the (meth)acrylic copolymer is

free of an epoxide group.

**12.** The cured composition of claim 11, wherein the cured composition is a pressure-sensitive adhesive.

**13.** The cured composition of claim 11 or 12, further comprising a tackifier.

**14.** An article comprising:

a substrate; and
a cured composition layer positioned adjacent to the substrate, wherein the cured composition comprises a reaction product of a curable composition comprising

a) an acid-modified epoxidized vegetable oil comprising a reaction product of 1) an epoxidized vegetable oil and 2) a mono-functional carboxylic acid that is free of an ethylenically unsaturated group, wherein the acid-modified epoxidized vegetable oil has greater than one epoxide group per molecule; and
b) a (meth)acrylic copolymer having pendant carboxylic acid groups, wherein the (meth)acrylic copolymer is free of an epoxide group.

**15.** The article of claim 14, wherein the cured composition layer is a pressure-sensitive adhesive.

**Patentansprüche**

**1.** Härtbare Zusammensetzung, umfassend:

a) ein säuremodifiziertes epoxidiertes Pflanzenöl, umfassend ein Reaktionsprodukt von 1) einem epoxidierten Pflanzenöl und 2) einer monofunktionellen Carbonsäure, die frei von einer ethylenisch ungesättigten Gruppe ist, wobei das säuremodifizierte epoxidierte Pflanzenöl mehr als eine Epoxidgruppe pro Molekül aufweist; und
b) ein (Meth)acrylcopolymer mit anhängenden Carbonsäuregruppen, wobei das (Meth)acrylcopolymer frei von einer Epoxidgruppe ist.

**2.** Härtbare Zusammensetzung nach Anspruch 1, wobei das (Meth)acrylcopolymer ein Elastomermaterial ist.

**3.** Härtbare Zusammensetzung nach Anspruch 1 oder 2, wobei das säuremodifizierte epoxidierte Pflanzenöl ein säuremodifiziertes epoxidiertes Sojabohnenöl, ein säuremodifiziertes epoxidiertes Leinsamenöl oder eine Mischung davon ist.

**4.** Härtbare Zusammensetzung nach einem der Ansprüche 1 bis 3, wobei das säuremodifizierte epoxidierte Pflanzenöl ein Epoxyäquivalentgewicht in einem Bereich von 400 bis 1200 aufweist.

**5.** Härtbare Zusammensetzung nach einem der Ansprüche 1 bis 4, wobei die härtbare Zusammensetzung 40 bis 75 Gew.-%, bezogen auf das Gesamtgewicht des (Meth)acrylcopolymers und des säuremodifizierten epoxidierten Pflanzenöls, des säuremodifizierten epoxidierten Pflanzenöls umfasst.

**6.** Härtbare Zusammensetzung nach einem der Ansprüche 1 bis 5, wobei das (Meth)acrylcopolymer aus einer Monomermischung gebildet ist, die (Meth)acrylsäure und ein nichtpolares Monomer mit einer einzigen ethylenisch ungesättigten Gruppe gebildet ist.

**7.** Härtbare Zusammensetzung nach Anspruch 6, wobei die Monomermischung 1 bis 15 Gew.% (Meth)acrylsäure, bezogen auf das Gesamtgewicht der Monomere in der Monomermischung, umfasst.

**8.** Härtbare Zusammensetzung nach einem der Ansprüche 1 bis 7, wobei das säuremodifizierte epoxidierte Pflanzenöl mindestens zwei Epoxidgruppen pro Molekül aufweist.

**9.** Härtbare Zusammensetzung nach einem der Ansprüche 1 bis 8, wobei das (Meth)acrylcopolymer aus einer Reaktionsmischung gebildet ist, die (Meth)acrylsäure und 2-Octyl(meth)acrylat umfasst.

**10.** Härtbare Zusammensetzung nach einem der Ansprüche 1 bis 9, wobei die monofunktionelle Carbonsäure eine

Verbindung der Formel (III) ist

R3-(CO)-OH (III)

wobei R3 ein lineares Alkyl mit 2 bis 14 Kohlenstoffatomen, ein verzweigtes Alkyl mit 2 bis 24 Kohlenstoffatomen oder ein Alkenyl mit 2 bis 24 Kohlenstoffatomen ist.

**11.** Gehärtete Zusammensetzung, umfassend das Reaktionsprodukt einer härtbaren Zusammensetzung, umfassend:

a) ein säuremodifiziertes epoxidiertes Pflanzenöl, umfassend ein Reaktionsprodukt von 1) einem epoxidierten Pflanzenöl und 2) einer monofunktionellen Carbonsäure, die frei von einer ethylenisch ungesättigten Gruppe ist, wobei das säuremodifizierte epoxidierte Pflanzenöl mehr als eine Epoxidgruppe pro Molekül aufweist; und
b) ein (Meth)acrylcopolymer mit anhängenden Carbonsäuregruppen, wobei das (Meth)acrylcopolymer frei von einer Epoxidgruppe ist.

**12.** Gehärtete Zusammensetzung nach Anspruch 11, wobei es sich bei der gehärteten Zusammensetzung um einen druckempfindlichen Klebstoff handelt.

**13.** Gehärtete Zusammensetzung nach Anspruch 11 oder 12, ferner umfassend einen Klebrigmacher.

**14.** Artikel, umfassend:

ein Substrat; und
eine gehärtete Zusammensetzungsschicht, die benachbart zu dem Substrat angeordnet ist, wobei die ausgehärtete Zusammensetzung ein Reaktionsprodukt einer härtbaren Zusammensetzung umfasst, umfassend

a) ein säuremodifiziertes epoxidiertes Pflanzenöl, umfassend ein Reaktionsprodukt von 1) einem epoxidierten Pflanzenöl und 2) einer monofunktionellen Carbonsäure, die frei von einer ethylenisch ungesättigten Gruppe ist, wobei das säuremodifizierte epoxidierte Pflanzenöl mehr als eine Epoxidgruppe pro Molekül aufweist; und
b) ein (Meth)acrylcopolymer mit anhängenden Carbonsäuregruppen, wobei das (Meth)acrylcopolymer frei von einer Epoxidgruppe ist.

**15.** Artikel nach Anspruch 14, wobei es sich bei der gehärteten Zusammensetzungsschicht um einen druckempfindlichen Klebstoff handelt.

## Revendications

**1.** Composition durcissable comprenant :

a) une huile végétale époxydée à modification acide comprenant un produit de réaction de 1) une huile végétale époxydée et 2) un acide carboxylique monofonctionnel qui est exempt d'un groupe à insaturation éthylénique, dans laquelle l'huile végétale époxydée à modification acide a plus d'un groupe époxyde par molécule ; et
b) un copolymère (méth)acrylique ayant des groupes acide carboxylique greffés, dans laquelle le copolymère (méth)acrylique est exempt d'un groupe époxyde.

**2.** Composition durcissable selon la revendication 1, dans laquelle le copolymère (méth)acrylique est un matériau élastomère.

**3.** Composition durcissable selon la revendication 1 ou 2, dans laquelle l'huile végétale époxydée à modification acide est une huile de soja époxydée à modification acide, une huile de lin époxydée à modification acide, ou un mélange de celles-ci.

**4.** Composition durcissable selon l'une quelconque des revendications 1 à 3, dans laquelle l'huile végétale époxydée à modification acide a un poids équivalent d'époxy dans une plage de 400 à 1200.

**5.** Composition durcissable selon l'une quelconque des revendications 1 à 4, où la composition durcissable comprend

40 à 75 pour cent en poids de l'huile végétale époxydée à modification acide sur la base d'un poids total du copolymère (méth)acrylique et de l'huile végétale époxydée à modification acide.

**6.** Composition durcissable selon l'une quelconque des revendications 1 à 5, dans laquelle le copolymère (méth)acrylique est formé à partir d'un mélange de monomères comprenant de l'acide (méth)acrylique et un monomère apolaire ayant un unique groupe à insaturation éthylénique.

**7.** Composition durcissable selon la revendication 6, dans laquelle le mélange de monomères comprend 1 à 15 pour cent en poids d'acide (méth)acrylique sur la base d'un poids total de monomères dans le mélange de monomères.

**8.** Composition durcissable selon l'une quelconque des revendications 1 à 7, dans laquelle l'huile végétale époxydée à modification acide a au moins deux groupes époxyde par molécule.

**9.** Composition durcissable selon l'une quelconque des revendications 1 à 8, dans laquelle le copolymère (méth)acrylique est formé à partir d'un mélange réactionnel comprenant de l'acide (méth)acrylique et du (méth)acrylate de 2-octyle.

**10.** Composition durcissable selon l'une quelconque des revendications 1 à 9, dans laquelle l'acide carboxylique monofonctionnel est un composé de Formule (III)

R3-(CO)-OH (III)

dans laquelle R3 est un alkyle linéaire ayant 2 à 14 atomes de carbone, un alkyle ramifié ayant 2 à 24 atomes de carbone, ou un alcényle ayant 2 à 24 atomes de carbone.

**11.** Composition durcie comprenant un produit de réaction d'une composition durcissable comprenant :

a) une huile végétale époxydée à modification acide comprenant un produit de réaction de 1) une huile végétale époxydée et 2) un acide carboxylique monofonctionnel qui est exempt d'un groupe à insaturation éthylénique, dans laquelle l'huile végétale époxydée à modification acide a plus d'un groupe époxyde par molécule ; et
b) un copolymère (méth)acrylique ayant des groupes acide carboxylique greffés, dans laquelle le copolymère (méth)acrylique est exempt d'un groupe époxyde.

**12.** Composition durcie selon la revendication 11, où la composition durcie est un adhésif sensible à la pression.

**13.** Composition durcie selon la revendication 11 ou 12, comprenant en outre un agent poisseux.

**14.** Article comprenant :

un substrat ; et
une couche de composition durcie positionnée adjacente au substrat, dans laquelle la composition durcie comprend un produit de réaction d'une composition durcissable comprenant

a) une huile végétale époxydée à modification acide comprenant un produit de réaction de 1) une huile végétale époxydée et 2) un acide carboxylique monofonctionnel qui est exempt d'un groupe à insaturation éthylénique, dans laquelle l'huile végétale époxydée à modification acide a plus d'un groupe époxyde par molécule ; et
b) un copolymère (méth)acrylique ayant des groupes acide carboxylique greffés, dans laquelle le copolymère (méth)acrylique est exempt d'un groupe époxyde.

**15.** Article selon la revendication 14, dans lequel la couche de composition durcie est un adhésif sensible à la pression.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008144703 A, Koch
- WO 2011156378 A
- WO 2013086014 A, Kalchang
- US 20120156484 A, Vendamme
- WO 2012100171 A, Sun
- US 2010261806 A1
- US 2010151241 A1
- WO 2013086004 A, Kalchang
- WO 2011119363 A, Clapper
- US 7385020 B, Anderson
- US 5804610 A, Hamer
- US 6294249 B, Hamer


### Non-patent literature cited in the description


- **SIENEL et al.** *Epoxides, Ullmann's Encyclopedia of Industrial Chemistry,* 2000, vol. 13, 139-154